Europäisches Patentamt

(19) European Patent Office

Office européen des brevets

(11) Numéro de publication : **0 360 759 B1**

(12) # FASCICULE DE BREVET EUROPEEN

(45) Date de publication du fascicule du brevet :
**08.01.92 Bulletin 92/02**

(51) Int. Cl.$^5$ : **G01L 1/24**

(21) Numéro de dépôt : **89810710.7**

(22) Date de dépôt : **20.09.89**

(30) Priorité : **23.09.88 FR 8812433**

(43) Date de publication de la demande :
**28.03.90 Bulletin 90/13**

(45) Mention de la délivrance du brevet :
**08.01.92 Bulletin 92/02**

(84) Etats contractants désignés :
**CH DE GB LI**

(56) Documents cités :
**EP-A- 0 267 036**
**IBM TECHNICAL DISCLOSURE BULLETIN,**
**vol. 24, no. 2, juillet 1981, pages 893-894, New York, US; H. KORTH: "Integrated optical force and stress sensor"**

(54) Capeur de force à guide d'ondes optique intégré dans un substrat.

(73) Titulaire : **CENTRE SUISSE D'ELECTRONIQUE ET DE MICROTECHNIQUE S.A.**
**Maladière 71**
**CH-2007 Neuchâtel (CH)**

(72) Inventeur : **Parriaux, Olivier**
**Cité-Derrière 3**
**CH-1005 Lausanne (CH)**
Inventeur : **Neuman Victor**
**Grand-Rue 5**
**CH-2035 Corcelles (CH)**
Inventeur : **Voirin, Guy**
**Brévards 6**
**CH-2000 Neuchâtel (CH)**

(74) Mandataire : **Brulliard, Joel**
**c/o Centre Suisse d'Electronique et de Microtechnique S.A. Maladière 71**
**CH-2007 Neuchâtel (CH)**

## Description

L'invention se rapporte à la mesure des forces ou des contraintes en général et concerne plus particulièrement un capteur de force comportant un guide d'ondes optique intégré dans un substrat propageant deux modes de polarisation perpendiculaires et dont les indices de réfraction varient en réponse à l'application d'une force, introduisant ainsi une différence de phase entre les modes propagés, proportionnelle à ladite force.

Il a déjà été proposé par le brevet CH 661985 de Dändliker et al. d'utiliser une fibre optique monomode biréfringente pour mesurer la force appliquée sur ladite fibre. La fibre est enroulée en forme d'hélice, dont les spires sont disposées entre deux plateaux. L'application d'une force sur l'un des plateaux par rapport à l'autre induit dans la fibre une variation des indices effectifs des modes de polarisation. Cet effet photoélastique a par ailleurs déjà été décrit dans l'article de Scott C. Rashleigh "Origins and Control of Polarization Effects in Single-Mode Fibers" (Journal of Lightwave Technology, Vol. LT-1, No. 2, June 20 1983, pp. 312-331). Dans le brevet précité, la détection par mesure interférométrique entre modes de polarisation est réalisée à l'aide d'éléments optiques discrets qui introduisent un déphasage entre les ondes propagées par la fibre.

Le fait d'utiliser une fibre optique comme transducteur présente un certain nombre d'inconvénients parmi lesquels on peut citer :

— La charge transmise par l'intermédiaire des plateaux n'est pas directement et entièrement appliquée sur le coeur de la fibre. Il existe entre le coeur, qui constitue le milieu actif, et les plateaux, un milieu intermédiaire constitué par la gaine de la fibre dont la présence diminue l'action de la force sur le coeur.

— L'utilisation d'une fibre optique restreint le choix des fibres aux seules fibres ayant un manteau métallique ou céramique du fait que l'emploi de fibres à manteau plastique induit une hystérèse, un effet de fluage et une variation de la surface d'appui de la force.

— Bien qu'idéal, l'emploi d'une fibre nue ne peut être envisagé, sa durée de vie serait alors trop courte.

— L'obtention d'un contact parfait entre la fibre et les plateaux requiert une grande uniformité du diamètre de la fibre utilisée et une grande planéité des plateaux, ce qui implique un coût élevé de fabrication.

Par ailleurs, le dispositif de détection en optique classique décrit dans le brevet précité comporte plusieurs éléments optiques discrets tels une lame quart-d'onde et une lame demi-onde, un polariseur et des détecteurs. Un tel dispositif, ayant recours à une configuration de composants discrets, est peu miniaturisable.

Enfin se pose le problème de l'immobilisation de la fibre entre les plateaux. Il est en effet nécessaire que la fibre reste protégée, que sa fixation n'induise pas de biréfringence parasite, qu'elle soit en contact avec les plateaux sur toute la longueur d'interaction et que la force soit transmise de manière uniforme. Le document précité ne fournit, à ce problème, aucun élément de solution.

Aussi un objet de l'invention est-il un capteur de force en optique intégrée ne présentant pas les inconvénients ci-dessus mentionnés.

Un autre objet est un capteur monolithique intégrant sur le même support à la fois le transducteur et le dispositif de détection.

Un autre objet est un capteur dont la sensibilité par rapport à un capteur à fibre optique est supérieure.

Les avantages de l'invention consistent principalement

— en une fabrication et un assemblage simples du capteur ;

— en un capteur aux performances stables et reproductibles ;

— en ce que le guide d'ondes, du fait qu'il est intégré, est bien protégé ;

— en ce que les effets de température ne modifient pas la distribution de la force le long du guide, car toutes les couches peuvent être du même matériau ;

— en ce que la sensibilité est intrinsèquement supérieure à celle du capteur à fibre optique, car la force agit directement, uniformément et entièrement sur le coeur du guide d'ondes. Le facteur d'amélioration est de l'ordre de 10.

D'autres objets, caractéristiques et avantages de la présente invention, apparaîtront plus clairement au cours de la description suivante d'exemples préférentiels de réalisation, ladite description étant faite en relation avec les dessins joints dans lesquels :

La fig. 1 représente un premier exemple de réalisation du capteur de force intégrant sur le même substrat un transducteur et une tête de lecture et supportant la source de lumière et le système de détection.

La fig. 2 est un deuxième exemple de réalisation dudit capteur de force dans lequel le réseau de couplage-mixage est composé de quatre réseaux concaves focalisateurs décalés longitudinalement.

La fig. 3 est une représentation détaillée du réseau de couplage-mixage.

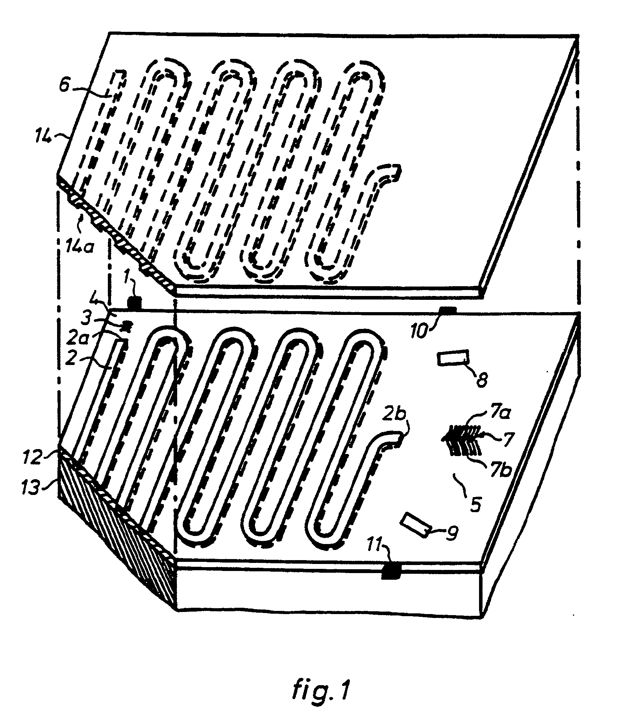

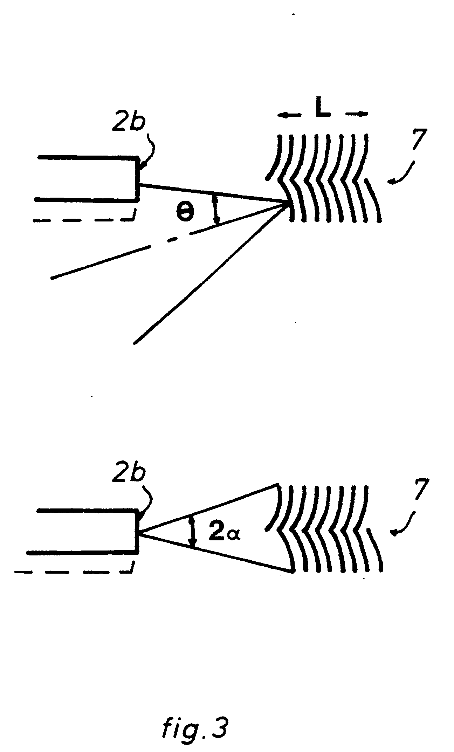

L'exemple de réalisation, représenté à la fig. 1 montre une source laser 1 supportée par le substrat 12 dans lequel serpente, sur une longueur d'environ un mètre, un guide d'ondes monomode 2 de 6 à 8 µm de largeur. Le guide d'ondes monomode 2 est défini par ses deux axes de biréfringence respectivement perpendiculaire à et dans le plan du substrat 12, la direction d'application de la force à mesurer étant perpendiculaire au plan du substrat 12. L'onde émise par la source 1 est telle que les deux modes de polarisation — appelés ci-après mode TE et mode TM — sont identiquement excités et que son vecteur représentatif forme avec les axes de biréfringence du guide d'ondes 2 un angle de 45°. L'entrée 2a et la sortie 2b du guide d'ondes 2 débouchent respectivement sur un guide planaire d'entrée 4 et sur un guide planaire de sortie 5. Un réseau de couplage focalisateur 3 est intégré sur le guide planaire d'entrée 4 entre la source 1 et l'entrée 2a du guide d'ondes 2. Un réseau de couplage-mixage 7 est intégré sur le guide planaire de sortie 5 et fait face à la sortie 2b du guide d'ondes 2. Ledit réseau est constitué par deux réseaux concaves focalisateurs 7a et 7b décalés longitudinalement de 1/4 de la période ou longueur de battement $L_b$ entre les deux modes planaires de polarisation. Les deux réseaux sont attaqués sous incidence oblique d'angle θ et ont une longueur d'interaction L de l'ordre de 1 à 2 mm (fig. 3). A titre d'exemples : pour une longueur d'onde de 0,66 μm, la période des réseaux est de l'ordre de 0,27 μm pour un angle d'incidence θ de l'ordre de 21° ± 20° et/ou de l'ordre de 0,66 μm pour un angle d'incidence de l'ordre de 67° ± 2°, le taux de couplage entre modes étant alors de 50%. Deux filtres de polarisation TM 8 et 9 sont intégrés de part et d'autre du réseau de couplage-mixage 7. Deux détecteurs 10 et 11 sont fixés sur la tranche du substrat 12 dans le prolongement du réseau de couplage-mixage 7 et des filtres de polarisation TM 8 et 9, au point de focalisation du réseau de couplage-mixage 7.

La partie active du capteur intégrant, sur le substrat 12, le guide d'ondes 2 transducteur et la tête de lecture (réseau de couplage-mixage 7 et filtres de polarisation TM 8 et 9) et supportant la source de lumière et le système de détection est intercalée d'une part entre une plaque de base 13 servant à rigidifier la structure et d'autre part un plateau charge 14 constitué et disposé de manière à n'être en contact qu'avec le guide d'ondes monomode 2. Le plateau de charge 14 comporte sur sa face inférieure 14a le même serpentin 6 que le guide d'ondes monomode 2. Le substrat 12 est un substrat passif en verre très mince d'environ 0,2 à 0,5 mm capable de s'adapter aux défauts de planéité du plateau de charge 14, sans que cela entraîne des contraintes initiales notables sur le guide d'ondes 2.

La source laser 1 excite le guide d'ondes monomode 2 via un réseau de couplage focalisateur 3 qui diffracte, dans le plan du guide planaire d'entrée 4 existant sous lui, la lumière émise et focalise les deux modes de polarisation vers l'entrée 2a du guide d'ondes 2. Le guide d'ondes 2 propageant les modes de polarisation TE et TM est soumis à la force à mesurer qui est appliquée perpendiculairement au plan du substrat 12 par l'intermédiaire du plateau de charge 14. La force induit par effet photoélastique une variation des indices effectifs de mode et introduit ou modifie la biréfringence dans le guide d'ondes 2. Il en résulte un déphasage entre les deux polarisations orthogonales proportionnel à la force appliquée.

Les deux modes de polarisation en sortie du guide d'ondes 2 se propagent dans le guide planaire de sortie 5 avec une ouverture 2α (fig. 3) et en direction du réseau de couplage-mixage 7.

Les deux champs incidents sont repris par les deux réseaux concaves focalisateurs 7a et 7b. Ces réseaux réfléchissent et focalisent chacun une moitié du cône de lumière sortant du guide monomode 2, les modes pouvant se propager dans le guide planaire de sortie 5 sont les mêmes que les modes sortant du guide monomode 2, à savoir des modes de polarisation TE et TM, mais la propagation a lieu dans une autre direction. L'angle d'incidence θ est choisi de façon à ce que le réseau de couplage-mixage 7 convertisse, avec un taux de couplage identique, les deux modes incidents $TE_i$ et $TM_i$ en les modes diffractés $TE_d'$ et $TE_d''$.

Le guide planaire d'entrée 4 sous le réseau de couplage 3 tout comme le guide planaire de sortie 5 sous le réseau de couplage-mixage 7 ont une faible biréfringence pour que les conditions d'accord de phase soient satisfaites pour les deux polarisations et que leur point focal, ou zone de concentration, se recouvrent. Les vecteurs représentatifs des modes diffractés $TE_d'$ et $TE_d''$ issus des modes incidents $TE_i$ et $TM_i$ sont alors les plus colinéaires possibles. Les modes diffractés $TM_d'$ et $TM_d''$ non désirés sont filtrés par les filtres de polarisation TM 8 et 9 par couplage résonnant de l'onde TM au mode de plasmon se propageant le long de la couche métallique du filtre de polarisation TM 8 et 9.

Le plateau de charge 14 n'étant en contact avec le guide d'ondes monomode 2 que par l'intermédiaire du serpentin 6 permet la transmission audit guide d'ondes 2 de la force à mesurer, le plateau de base 13 permet quant à lui de rigidifier l'ensemble de la structure.

Dans l'exemple de réalisation les deux détecteurs 10 et 11 délivrent des signaux électriques sinusoïdaux en quadrature dont l'argument est proportionnel à la force appliquée.

La source 1 et le réseau de couplage d'entrée 3 peuvent être tels que décrits par H. Nishihara et al., "Grating Devices for Integrated Optics", Proceedings of the Fourth European Conference on Integrated Optics ECIO 87 (Glasgow) pp. 139-144.

Au lieu d'utiliser un réseau de couplage d'entrée, il est également possible d'exciter l'extrémité du guide d'ondes 2 au moyen d'une fibre amorce biréfringente, le guide 2 étant alors prolongé jusqu'à l'extrémité du substrat 12.

Le guide d'ondes 2 et les guides planaires d'entrée et de sortie 4 et 5 sont réalisés simultanément dans un substrat passif 12 qui peut, par exemple, être une plaquette de silicium. La technologie des échanges ioniques dans les verres, décrite par J.-E. Gortych et al., "Fabrication of planar optical waveguides by k+ ion exchange in BK7 glass," Optics Letters/Vol. 11, No. 2/February 1986 pp. 100-102 peut être avantageusement utilisée pour la réalisation de guides ayant des pertes inférieures à 0,02 dB/cm.

Une autre technologie possible est la technologie développée par la maison SCHOTT et décrite par L. Ross et al., "Single mode integrated optical waveguides by ion-exchange in glass", Fifth European Fibre Optic Communications & Local Area Networks Exposition, EFOC/LAN 87, 3-5 June 1987, pp. 99-102. Le guide ainsi réalisé doit induire une biréfringence essentiellement de forme (c'est-à-dire une biréfringence due à la non symétrie circulaire du guide d'ondes 2) et non de contrainte (c'est-à-dire une biréfringence due à la non symétrie circulaire des contraintes appliquées au guide d'ondes 2), ceci dans le but d'éviter les variations de biréfringence avec la température.

Les réseaux concaves 7a et 7b sont obtenus par segmentations successives de manière à obtenir la courbure désirée. Lesdits réseaux concaves 7a et 7b sont constitués de segments diélectriques d'indice plus élevé que celui du guide d'ondes 2, par exemple en TiO$_2$, réalisés par dépôt et gravure par plasma.

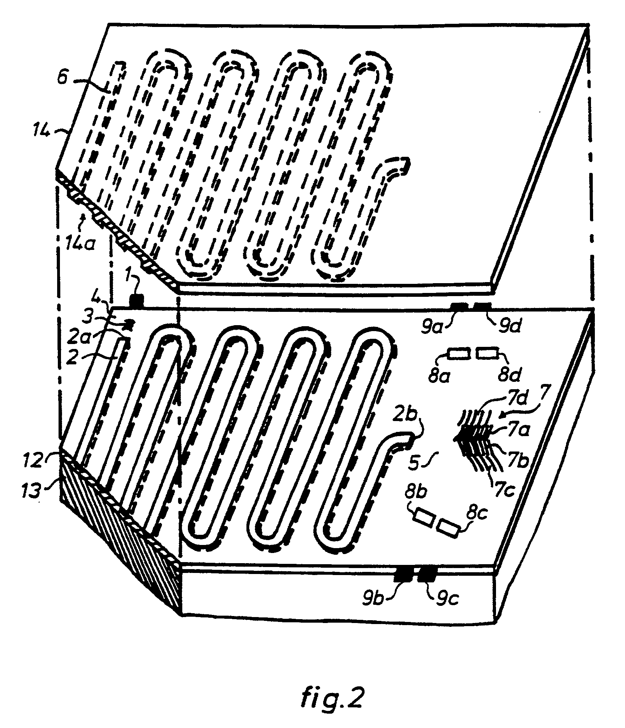

Une réalisation préférée du capteur de force est montrée à la fig. 2, dans laquelle les éléments analogues à ceux de la fig. 1 portent les mêmes références. Le réseau de couplage-mixage 7 est constitué de quatre réseaux concaves focalisateurs 7a, 7b, 7c et 7d décalés longitudinalement par rapport à l'un d'entre eux respectivement de un, deux et trois quarts de la longueur de battement L$_b$. Ledit réseau de couplage-mixage 7 divise l'onde incidente $\Sigma_i$ sortant du guide d'ondes de sortie 2b, en quatre ondes diffractées $\Sigma_1$ à $\Sigma_4$ et focalise chacune de ces ondes sur un détecteur 9a, 9b, 9c ou 9d à travers un filtre de polarisation TM 8a, 8b, 8c et 8d. Les réseaux concaves focalisateurs 7a, 7b, 7c et 7d sont attaqués sous angle d'incidence θ (fig. 3) de l'ordre de 21° ± 2° ou de 67° ± 2°. Un angle d'incidence θ de 21° impose au réseau une période spatiale de l'ordre de 0,27 μm, alors qu'un angle d'incidence θ de 67° impose une période spatiale de l'ordre de 0,66 μm afin d'obtenir un taux de couplage entre modes de 50%, à une longueur d'onde de 0,66 μm.

Les filtres de polarisation TM 8 et 9 sont disposés sur le guide planaire de sortie 5 d'indice de réfraction n$_g$ selon une méthode connue décrite par D. Gruchmann et al., "Fiber-Optic Polarizers with High Extinction Ratio", 9th European Conference on Optical Communication ECOC 83 pp. 305-308.

Les deux détecteurs 10 et 11 sont installés soit sur la tranche du substrat 12 comme décrit précédemment ou encore hors du plan du substrat 12 où ils collectent la lumière par deux nouveaux réseaux de diffraction focalisateurs, non représentés mais pouvant être réalisés de façon similaire à celle du réseau de couplage focalisateur 3.

Un plateau de charge 14 est réalisé dans le même matériau que le substrat 12 ou dans un verre ayant sensiblement le même coefficient thermique.

Le serpentin 6 de la face inférieure 14a du plateau de charge 14 est réalisé par procédé photolitographique, de préférence à partir du même masque que celui utilisé pour la réalisation du guide monomode 2 ou bien à partir d'un masque plus large selon la sensibilité recherchée. La face inférieure 14a est attaquée chimiquement de quelques microns de profondeur sur toute sa surface sauf le serpentin 6. Le guide d'ondes monomode 2 et le serpentin 6 sont alignés et l'assemblage se fait :

— soit à sec en contact optique par la technique dite "anodic bonding" verre sur verre, le plateau 14 étant alors du même verre que le substrat 12, ou toute autre technologie d'assemblage non organique :

— soit avec un film de colle optique de bas indice, distribué sur le substrat 12 et le serpentin 6 du plateau de charge 14.

Une plaque de base 13 de même coefficient d'expansion thermique est assemblée au substrat 12 sans contrainte par collage.

## Revendications

1. Capteur de force à guide d'ondes optique caractérisé en ce qu'il est intégré sur un même substrat (12)
— des moyens optiques de couplage (3)
— un guide d'ondes optique monomode (2) biréfringent
— un réseau de couplage-mixage (7) constitué de N réseaux concaves focalisateurs (7a, 7b ou 7a, 7b, 7c, 7d) et
— N filtres de polarisation TM (8, 9 ou 8a, 8b, 8c, 8d) en ce qu'il est fixé
— un plateau de charge (14) sur le guide d'ondes (2) et
— une plaque de base (13) au substrat (12) et en ce que le substrat (12) et la plaque de base (13) supportent
— une source laser monomode (1) et
— N détecteurs (10, 11 ou 9a, 9b, 9c, 9d).

2. Capteur de force à guide d'ondes optique selon la revendication 1 caractérisé en ce que le réseau de couplage-mixage (7)
— sépare spatialement l'onde incidente en N ondes diffractées
— focalise l'onde sur les détecteurs et
— réalise une conversion des modes de polarisation incidents TE$_i$ et TM$_i$ sortant dudit guide

d'ondes (2) en modes TE$_d$ et TM$_d$ diffractés, avec une répartition d'énergie identique.

3. Capteur de force à guide d'ondes optique selon l'une des revendications 1 et 2 caractérisé en ce que N est égal à deux et en ce que les deux réseaux concaves focalisateurs (7a, 7b) sont décalés longitudinalement d'un quart de la longueur de battement L$_b$.

4. Capteur de force à guide d'ondes optique selon l'une des revendications 1 et 2 caractérisé en ce que N est égal à quatre et en ce que les quatre réseaux concaves focalisateurs (7a, 7b, 7c, 7d) sont décalés longitudinalement par rapport à l'un d'entre eux respectivement de un, deux et trois quarts de la longueur de battement L$_b$.

5. Capteur de forces selon l'une des revendications 1 et 2, caractérisé
en ce que, pour une longueur d'onde de 0,66 μm, les réseaux constituant le réseau de couplage-mixage (7) sont attaqués sous incidence oblique d'un angle de l'ordre de 21° ± 2° ou 67° ± 2° ou encore de l'ordre de 21° ± 2° pour certains et de l'ordre de 67° ± 2° pour les autres,
en ce que la période spatiale desdits réseaux est de l'ordre de 0,27 μm pour un angle d'incidence de 21° et de l'ordre de 0,66 μm pour un angle d'incidence de 67°
et en ce que lesdits réseaux sont réalisés par segmentation.

6. Capteur de force selon la revendication 1, caractérisé en ce qu'un masque, représentant le même serpentin que le guide d'ondes, est transféré sur la face interne (14a) du plateau de charge (14) et en ce que le serpentin dudit masque est 1 à P fois plus large que le serpentin dudit guide d'ondes.

## Patentansprüche

1. Kraftaufnehmer mit optischem Wellenleiter, dadurch gekennzeichnet, daß auf einem selben Substrat (12) integriert sind
— optische Kopplungsmittel (3)
— ein doppelbrechender Monomode-Wellenleiter (2)
— ein Kopplung-Mischungsgitter (7), gebildet von N konkaven fokussierenden Gittern (7a, 7b oder 7a, 7b, 7c, 7d) und
— N Polarisationsfiltern TM (8, 9 oder 8a, 8b, 8c, 8d), daß befestigt sind
— eine Belastungsplatte (14) auf dem Wellenleiter (2) und
— eine Grundplatte an dem Substrat (12) und daß das Substrat (12) und die Grundplatte (13) tragen
— eine Monomode-Laserquelle (1) und
— N Detektoren (10, 11 oder 9a, 9b, 9c, 9d).

2. Kraftaufnehmer mit optischem Wellenleiter gemäß Anspruch 1, dadurch gekennzeichnet, daß das Kopplung-Mischungsgitter (7)
— die auftreffende Welle in N gebeugte Wellen räumlich trennt
— die Welle auf die Detektoren fokussiert und
— eine Konversion der auftreffenden Polarisationsmoden TE$_i$ und TM$_i$, die den Wellenleiter (2) in gebeugten Moden TE$_d$ und TM$_d$ verlassen, mit einer identischen Energieverteilung realisiert.

3. Kraftaufnehmer mit optischem Wellenleiter nach einem der Ansprüche 1 oder 2, dadurch gekennzeichnet, daß N gleich zwei ist und daß die zwei konkaven fokussierenden Gitter (7a, 7b) der Länge nach versetzt sind um ein Viertel der Überlagerungslänge L$_b$.

4. Kraftaufnehmer mit optischem Wellenleiter nach einem der Ansprüche 1 oder 2, dadurch gekennzeichnet, daß N gleich vier ist und daß die vier konkaven fokussierenden Gitter (7a, 7b, 7c, 7d) der Länge nach versetzt sind bezogen auf das eine unter ihnen um jeweils ein, zwei oder drei Viertel der Überlagerungslänge L$_b$.

5. Kraftaufnehmer nach einem der Ansprüche 1 oder 2, dadurch gekennzeichnet,
daß für eine Wellenlänge von 0,66 μm die das Kopplung-Mischungsgitter (7) bildenden Gitter angelaufen werden unter schrägem Einfall mit einem Winkel in der Größenordnung von 21° ± 2° oder 67° ± 2° oder ferner in der Größenordnung von 21° ± 2° für gewisse und in der Größenordnung von 67° ± 2° für die anderen,
daß die räumliche Periode der Gitter in der Größenordnung von 0,27 μm für einen Einfallswinkel von 21° und der Größenordnung von 0,66 μm für einen Einfallswinkel von 67° ist
und daß die Gitter durch Segmentierung verwirklicht sind.

6. Kraftaufnehmer nach Anspruch 1, dadurch gekennzeichnet, daß eine die gleiche Schlange wie den Wellenleiter darstellende Maske übertragen ist auf die innere Fläche (14a) der Belastungsplatte (14) und daß die Schlange der Maske 1- bis P-fach größer als die Schlange des Wellenleiters ist.

## Claims

1. Force meter with an optical waveguide characterised in that on the same substrate (12) are integrated
— optical coupling means (3)
— a birefringent single-mode optical waveguide (2)
— a coupling-mixing grating (7) formed by n concave focusing gratings (7a, 7b or 7a, 8b, 7c, 7d) and
— n TM polarising filters (8, 9 or 8a, 8b, 8c, 8d) in that
— a load plate (14) is fixed to the waveguide (2) and

— a base panel (13) is fixed to the substrate (12) and in that the substrate (12) and the base panel (13) support

— a single-mode laser source (1) and

— n detectors (10, 11 or 9a, 9b, 9c, 9d).

2. Force meter with an optical waveguide according to claim 1 characterised in that the coupling-mixing grating (7)

— spatially separates the incident wave into n diffracted waves

— focuses the wave onto the detectors and

— carries out a conversion of the incident polarising modes $TE_l$ and $TM_l$ coming from the said waveguide (2) into diffracted $TE_d$ and $TM_d$ modes, with an identical energy distribution.

3. Force meter with an optical waveguide according to one of claims 1 and 2 characterised in that n is equal to two and in that the two concave focusing gratings (7a, 7b) are offset longitudinally by a quarter of the beat length $L_b$.

4. Force meter with an optical waveguide according to one of claims 1 and 2 characterised in that n is equal to four and in that the four concave focusing gratings (7a, 7b, 7c, 7d) are offset longitudinally with respect to each other respectively by one, two and three quarters of the beat length $L_b$.

5. Force meter according to one of claims 1 and 2, characterised in that, for a wavelength of 0.66 μm, the gratings constituting the coupling-mixing grating (7) are driven at an oblique incidence at an angle of the order of $21° \pm 2°$ or $67° \pm 2°$ or again of the order of $21° \pm 2°$ for some and of the order of $67° \pm 2°$ for the others,

in that the spatial separation of the said gratings is of the order of 0.27 μm for an angle of incidence of 21° and of the order of 0.66 μm for an angle of incidence of 67°

and in that the said gratings are produced by segmentation.

6. Force meter according to claim 1, characterised in that a mask, representing the same coil as the waveguide, is transferred onto the internal face (14a) of the load plate (14) and in that the coil of the said mask is 1 to p times wider than the coil of the said waveguide.

*fig.1*

fig.2

fig.3